# FASCICULE DE BREVET EUROPEEN

(11) **EP 3 720 249 B1**
(45) Date de publication et mention de la délivrance du brevet: **05.11.2025**
(21) Numéro de dépôt: 19166998.5
(22) Date de dépôt: 03.04.2019
(51) Int. Cl.: H05B 45/14, G01M 11/06, H05B 47/125, H05B 45/10

(54) **CALIBRATION D'UN MODULE LUMINEUX À ÉLÉMENTS ÉLECTROLUMINESCENTS**
KALIBRIERUNG EINES LEUCHTMODULS MIT ELEKTROLUMINESZENTEN ELEMENTEN
CALIBRATION OF A LIGHT MODULE WITH ELECTROLUMINESCENT ELEMENTS

(43) Date de publication de la demande: 07.10.2020
(73) Titulaire: Valeo Vision, 93012 Bobigny Cedex (FR)
(72) Inventeur: ALBOU, Pierre, 93012 BOBIGNY Cedex (FR); GODBILLON, Vincent, 93012 BOBIGNY Cedex (FR)
(74) Mandataire: Valeo Visibility

(56) Documents cités:
- EP-A1- 2 416 139
- EP-A1- 3 225 905
- WO-A2-2016/051207
- US-A1- 2012 019 164
- US-A1- 2016 150 623
- US-B2- 9 439 261

## Description

La présente demande concerne la calibration d'un module lumineux comprenant une source lumineuse, pour un véhicule automobile apte à émettre un faisceau de rayons lumineux selon un axe longitudinal.

On entend par module lumineux tout dispositif apte à émettre de la lumière, notamment pour l'éclairage et/ou la signalisation et/ou l'éclairage intérieur dans le véhicule automobile.

Un tel module lumineux intègre à cet effet une source de lumière. Les sources de lumière utilisées pour l'éclairage et la signalisation dans les véhicules automobiles sont de plus en plus fréquemment constituées par des diodes électroluminescentes, notamment pour des avantages d'encombrement et d'autonomie par rapport à des sources de lumière classiques. L'utilisation de diodes électroluminescentes dans les modules d'éclairage et/ou de signalisation a permis en outre aux acteurs du marché (fabricant d'automobiles et concepteur de dispositifs d'éclairage et/ou de signalisation) d'apporter une touche créative à la conception de ces dispositifs, notamment pour l'utilisation d'un nombre toujours plus grand de ces diodes électroluminescentes pour réaliser des effets optiques.

On connaît par exemple des modules lumineux comprenant un imageur apte à moduler spatialement l'intensité lumineuse d'un faisceau lumineux issu d'une source lumineuse.

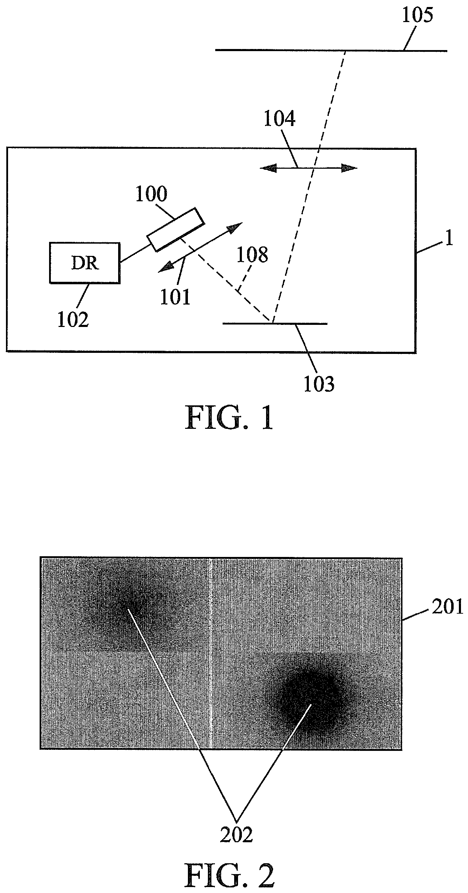

Un exemple d'un tel module lumineux est illustré en référence à la figure 1.

Le module lumineux 1 comprend une source lumineuse 100, telle qu'une source à diodes électroluminescentes ou une source diode laser apte à émettre un faisceau lumineux 108. La source lumineuse 100 peut être pilotée par un module de pilotage 102, aussi appelé « *driver* ».

Le faisceau lumineux 108 est collimaté par une unité de collimation 101, pouvant comprendre une ou plusieurs lentilles.

Le faisceau 108 est ainsi collimaté vers un imageur 103 qui module spatialement l'intensité lumineuse du faisceau et dirige le faisceau modulé vers une unité de projection 104. L'unité de projection 104 peut comprendre des lentilles et un réflecteur et est apte à projeter le faisceau lumineux vers l'extérieur du véhicule automobile, afin de réaliser une fonction lumineuse.

Dans un tel module lumineux comprenant plusieurs unités réalisant des fonctions respectives, des défauts de fabrication ou de montage sont susceptibles d'impacter l'homogénéité du faisceau. Par exemple, lorsque le module lumineux est conçu pour obtenir une image de référence sur un écran 105, certains pixels de l'image obtenue par projection du faisceau lumineux 108 peuvent, en pratique, différer de pixels correspondants de l'image de référence.

L'image de référence peut par exemple être un rectangle blanc homogène dans lequel l'ensemble des pixels ont la même intensité lumineuse. L'image obtenue par un module lumineux 1 présentant un défaut peut cependant apparaître à l'écran 205 comme illustré en référence à la figure 2.

Sur la figure 2, l'image 201 obtenue par projection sur l'écran comprend des zones sombres 202, et l'image 201 diffère ainsi de l'image de référence homogène.

De tels défauts peuvent être provoqués par :
- les optiques des unités de collimation et de projection 101 et 104. Dans ce cas, et comme illustré sur la figure 2, un effet de vignettage peut apparaître sur l'image projetée 201 ;
- un défaut dans la source lumineuse 100 provoquant un faisceau lumineux 108 inhomogène dès l'origine ;
- un défaut dans l'imageur 103, notamment un défaut dans le coefficient de transmission ou réflexion, global ou local, de l'imageur 103
- une tolérance de fabrication des éléments du module lumineux, cette tolérance pouvant impacter la taille ou la forme desdits éléments,
- un défaut de positionnement des éléments du module lumineux entre eux lors de leur assemblage.

Il existe ainsi un besoin de corriger ou compenser les défauts de fabrication ou d'assemblage d'un module lumineux. Un tel besoin n'est aucunement spécifique du module lumineux 1 illustré sur la figure 2 et s'applique à tout module lumineux. Le document EP 2 416 139 A1 divulgue un exemple de procédé et de système de calibration d'un module lumineux.

Un premier aspect de l'invention concerne un procédé de calibration d'un module lumineux selon la revendication 1.

L'utilisation d'une source lumineuse à éléments électroluminescents regroupés en sous-ensembles adressables individuellement et correspondant à des pixels de l'image projetée, permet de corriger des défauts du module lumineux, défauts qui sont inévitables lors de la fabrication ou lors de l'assemblage. En outre, une telle correction ou calibration est réalisée sans nécessiter de modifications des éléments optiques du module lumineux : la correction repose sur le stockage de valeurs d'alimentation modifiée pour au moins certains des sous-ensembles d'éléments électroluminescents. Les éléments électroluminescents sont capables par nature d'accepter une alimentation différente d'une valeur nominale et, ainsi, la calibration n'induit pas de dégradation de la source lumineuse.

Dans un mode de réalisation, le procédé peut comprendre en outre une étape de mise en température du module lumineux à une valeur de température donnée, et, lors de l'étape de stockage, la valeur d'alimentation modifiée peut être stockée en association avec un identifiant du sous-ensemble comprenant le premier élément électroluminescent et avec la valeur de température donnée.

En effet, les plages de fonctionnement d'éléments électroluminescents dépendent fortement de la température environnante. Il est ainsi particulièrement avantageux de stocker la valeur d'alimentation modifiée en association avec la valeur de température pour laquelle elle est calculée.

En complément, les étapes du procédé peuvent être itérées, et, à chaque itération, le module lumineux peut être mis en température à une valeur de température différente de la valeur de température de l'itération précédente.

Ainsi, la précision de la calibration est améliorée et les images projetées par le module lumineux sont proches de l'image de référence quelle que soit la température environnant le module lumineux.

Enfin, le procédé peut être appliqué pour plusieurs valeurs d'alimentation électrique des pixels. La correction peut alors se faire pour une température à une valeur d'alimentation donnée, ou par interpolation entre les valeurs stockées de ces différents paramètres.

Un deuxième aspect de l'invention concerne un programme informatique comportant des instructions pour la mise en œuvre des étapes du procédé selon le premier aspect de l'invention, lorsque ces instructions sont exécutées par un processeur.

Un troisième aspect de l'invention concerne un système de calibration d'un module lumineux selon la revendication 5.

Un exemple ne faisant pas partie de l'invention concerne un module lumineux comprenant :
- au moins une source lumineuse comprenant un ensemble d'éléments électroluminescents disposés sur un même substrat, ledit ensemble d'éléments électroluminescents comprenant des sous-ensembles d'au moins un élément électroluminescent, chaque sous-ensemble étant apte à être alimenté individuellement en courant ;
- une mémoire stockant des valeurs d'alimentation en association avec des identifiants de sous-ensembles d'éléments électroluminescents ;
- une unité de pilotage apte à alimenter les sous-ensembles de la source électroluminescente en fonction des valeurs d'alimentation associées ;
dans lequel, sur réception d'une valeur d'alimentation modifiée en association avec un identifiant donné d'un sous-ensemble d'éléments électroluminescents, la mémoire est apte à stocker la valeur d'alimentation modifiée en association avec l'identifiant donné du sous-ensemble, et dans lequel l'unité de pilotage alimente le sous-ensemble identifié en fonction de la valeur d'alimentation modifiée.

Selon un mode de réalisation, le module lumineux peut comprendre en outre un capteur de température apte à mesurer une valeur courante de température, en particulier une valeur courante de température à proximité de la source lumineuse, notamment sur la source lumineuse, et, sur réception d'une valeur d'alimentation modifiée en association avec un identifiant donné d'un sous-ensemble d'éléments électroluminescents et avec une valeur de température donnée, la mémoire est apte à stocker la valeur d'alimentation modifiée en association avec l'identifiant donné du sous-ensemble et avec la valeur de température donnée. Si un identifiant d'un sous-ensemble est associé à plusieurs valeurs d'alimentation modifiées et valeurs de température respective, le module de pilotage est apte à sélectionner la valeur d'alimentation modifiée associée à la valeur de température la plus proche de la valeur courante de température. Alternativement le module de pilotage est apte à calculer une interpolation de la valeur d'alimentation en fonction des valeurs d'alimentations correspondant à une température inférieure, notamment la température immédiatement inférieure, et à une température supérieure, notamment la température immédiatement supérieure à la valeur courante de température.

Ainsi, les défauts du module lumineux sont compensés avec précision quelle que soit le tempérante environnante.

En complément, le module lumineux peut comprendre en outre une unité de focalisation apte à focaliser un faisceau lumineux issu de la source lumineuse, un imageur apte à moduler spatialement l'intensité lumineuse du faisceau focalisé, et un une unité de projection apte à projeter le faisceau lumineux modulé vers l'extérieur du module lumineux.

En complément, l'imageur peut être une matrice de micro-miroirs.

Selon un mode de réalisation de l'invention, les éléments électroluminescents peuvent être des bâtonnets électroluminescents de dimension submillimétrique ou des plots électroluminescent.

L'utilisation de bâtonnets ou de plots électroluminescents de dimension submillimétrique permet d'améliorer la précision de la correction, de par leur petite taille.

D'autres caractéristiques et avantages de l'invention apparaîtront à l'examen de la description détaillée ci-après, et des dessins annexés sur lesquels:
- la figure 1 illustre un module lumineux selon l'art antérieur ;
- la figure 2 illustre une image projetée sur un écran par un module lumineux selon l'art antérieur, comprenant des défauts ;
- la figure 3 illustre un système de calibration d'un module lumineux selon un mode de réalisation de l'invention ;
- la figure 4 illustre une source lumineuse d'un module lumineux selon un mode de réalisation ;
- la figure 5 est une vue en coupe d'une source lumineuse d'un module lumineux selon un mode de réalisation ;
- la figure 6 est un diagramme illustrant les étapes d'un procédé selon un mode de réalisation de l'invention.

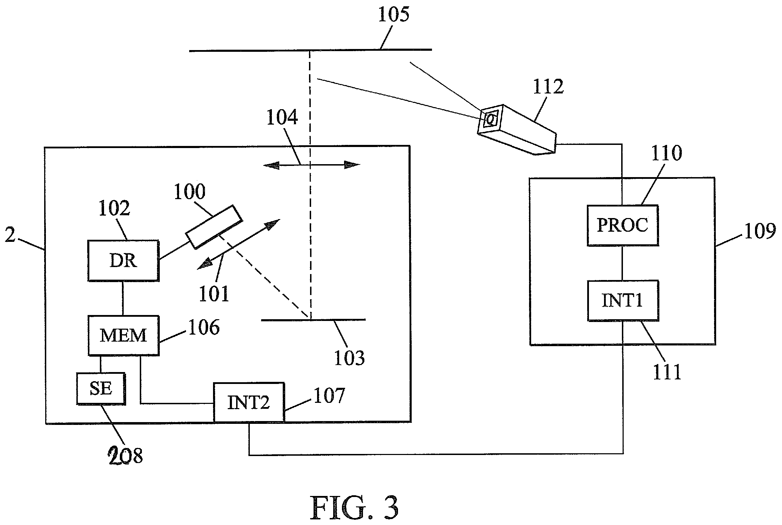

La figure 3 illustre un système de calibration d'un module lumineux 2 selon un mode de réalisation de l'invention.

A titre illustratif, on a représenté un module lumineux 2 dont la structure est proche de celle du module lumineux 1 de la figure 1 : le module lumineux 2 comprend une source lumineuse 100, une unité de collimation 101, une unité de pilotage 102, un imageur 103 et une unité de projection 104. Les éléments communs entre le module lumineux 2 et le module lumineux 1 sont donc repérés par des références communes.

L'invention propose de calibrer le module lumineux 2, dans lequel la source lumineuse 100 est une source lumineuse comprenant une pluralité d'éléments électroluminescents disposés sur un même substrat. Les éléments électroluminescents sont répartis en sous-ensembles d'au moins un élément électroluminescent, chaque sous-ensemble étant adressable individuellement. Selon certains modes de réalisation, un sous-ensemble comprend plusieurs éléments électroluminescents pilotables individuellement. On comprendra ainsi que l'invention s'applique à tout module lumineux comprenant une source comprenant une pluralité d'éléments électroluminescents, et ce quel que soit le système optique permettant de projeter un faisceau lumineux à l'extérieur du module lumineux 2.

Comme il sera mieux compris à la lecture de ce qui suit, l'utilisation d'une telle source lumineuse rend possible une calibration précise et permet de compenser des défauts de fabrication et d'assemblage à moindres coûts.

L'imageur 103 peut être une matrice de micro-miroirs de type DMD, pour « *Digital Micromirror Device* » en anglais, un module LCD transparent ou réflechissant ou un module L-COS, pour « *Liquid Crystal On Silicon* ».

La source lumineuse 100, et notamment chacun des sous-ensembles d'éléments électroluminescents, est pilotée par l'unité de pilotage 102, qui est en outre reliée à une mémoire 106 selon l'invention. Le module lumineux 2 peut en outre comprendre une interface 107 apte à échanger des données avec un module de calibration 109.

Une telle interface 107 est optionnelle selon l'invention puisque le procédé de calibration peut prévoir que le module de calibration 109 accède directement à la mémoire 106 du module lumineux 2.

Le module lumineux 2 peut en outre comprendre un capteur de température 208 apte à mesurer une valeur de température courante et ambiante.

Le module de calibration 9 peut comprendre une interface 111 et un processeur 110, apte à être relié à une caméra 112 placée devant l'écran 105. Dans un mode de réalisation, la caméra 112 est intégrée dans le module de calibration 109.

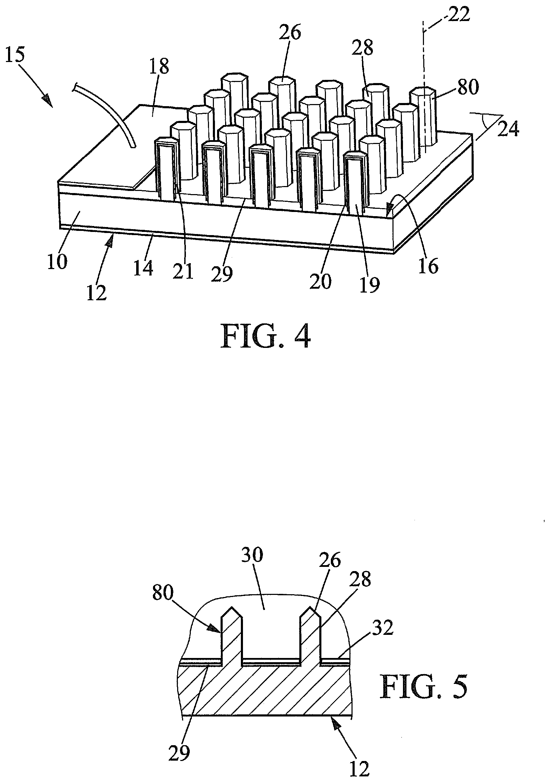

La figure 4 illustre un ensemble 15 d'éléments électroluminescents selon un exemple.

Sur la figure 4, à titre d'exemple, les éléments électroluminescents sont des bâtonnets électroluminescents 80 de dimensions submillimétriques, que l'on appellera par la suite bâtonnets électroluminescents. Ces bâtonnets électroluminescents 80 prennent naissance sur un même substrat 10. Chaque bâtonnet électroluminescent 80, ici formé par utilisation de nitrure de gallium GaN, s'étend perpendiculairement, ou sensiblement perpendiculairement, en saillie de substrat 10, ici réalisé à base de silicium, d'autres matériaux comme du carbure de silicium pouvant être utilisés pour le substrat sans sortir du contexte de l'invention. A titre d'exemple, les bâtonnets électroluminescents 80 pourraient être réalisés à partir d'un composé à base de nitrure d'aluminium et de nitrure de gallium AlN/GaN, ou à partir d'un composé à base d'aluminium, d'indium et de gallium AlN/GaN/InGaN.

Sur la figure 2, le substrat 10 présente une face inférieure 12, sur laquelle est rapportée une première électrode 14, et une face supérieure 16, en saillie de laquelle s'étendent les bâtonnets électroluminescents 80 et sur laquelle est rapportée une deuxième électrode 18.

A noter qu'un seul sous-ensemble de bâtonnets électroluminescents 80 est représenté sur la figure 4. Toutefois, comme expliqué ci-avant, l'ensemble d'éléments électroluminescents peut comprendre plusieurs sous-ensembles d'au moins un élément électroluminescent. Dans ce cas, une ou des électrodes 14 et 18 peuvent être dédiées à un même sous-ensemble, de manière à ce que chaque sous-ensemble puisse être alimenté individuellement, c'est-à-dire indépendamment des autres sous-ensembles.

Différentes couches de matériaux sont superposées sur la face supérieure 16, notamment après la croissance des bâtonnets électroluminescents depuis le substrat ici.

Parmi ces différentes couches, on peut trouver au moins une couche de matériau conducteur électriquement, afin de permettre l'alimentation électrique des bâtonnets électroluminescents 80. Cette couche est gravée de manière à relier les bâtonnets de chaque sous-ensemble adressable individuellement du premier ensemble 2 de la source de lumière 6 entre eux.

Les bâtonnets électroluminescents 80 de dimensions submillimétriques s'étirent depuis le substrat 10 et comportent, tel que cela est visible sur la figure 2, chacun un noyau 19 en nitrure de gallium, autour duquel sont disposés des puits quantiques 20 formés par une superposition radiale de couches de matériaux différents, ici du nitrure de gallium et du nitrure de gallium-indium, et une coque 21 entourant les puits quantiques également réalisée en nitrure de gallium.

Chaque bâtonnet s'étend selon un axe longitudinal 22 définissant sa hauteur, la base 23 de chaque bâtonnet étant disposée dans un plan 24 de la face supérieure 16 du substrat 10.

Les bâtonnets électroluminescents 80 présentent avantageusement la même forme. Ces bâtonnets électroluminescents 80 sont chacun délimité par une face terminale 26 et par une paroi circonférentielle 28 qui s'étend le long de l'axe longitudinal. Lorsque les bâtonnets électroluminescents 80 sont dopés et font l'objet d'une polarisation, la lumière résultante en sortie de la source lumineuse 100 est émise principalement à partir de la paroi circonférentielle 28, étant entendu que l'on peut prévoir que des rayons lumineux sortent également, au moins en petite quantité, à partir de la face terminale 26. Il en résulte que chaque bâtonnet électroluminescent 80 agit comme une unique diode électroluminescente et que la densité des bâtonnets électroluminescents 80 améliore la luminance de la source lumineuse 100.

La paroi circonférentielle 28 d'un bâtonnet électroluminescent 80, correspondant à la coquille de nitrure de gallium, est recouverte par une couche d'oxyde conducteur transparent TCO 29 qui forme l'anode de chaque bâtonnet complémentaire à la cathode formée par le substrat.

Cette paroi circonférentielle 28 s'étend le long de l'axe longitudinal 22 depuis le substrat 10 jusqu'à la face terminale 26, la distance de la face terminale 26 à la face supérieure 16 du substrat, depuis laquelle prennent naissance les bâtonnets électroluminescents 80, définissant la hauteur de chaque bâtonnet électroluminescent 80. A titre d'exemple, on peut prévoir que la hauteur d'un bâtonnet électroluminescent 80 est comprise entre 1 et 10 micromètres, tandis que l'on peut prévoir que la plus grande dimension transversale de la face terminale, perpendiculairement à l'axe longitudinal 22 du bâtonnet électroluminescent concerné, soit inférieure à 2 micromètres.

On peut également prévoir de définir la surface d'un bâtonnet électroluminescent 80, dans un plan de coupe perpendiculaire à cet axe longitudinal 22, dans une plage de valeurs déterminée, et notamment entre 1,96 et 4 micromètres carré.

Ces dimensions, données à titre d'exemple non limitatif, permettent de démarquer une source de lumière 100 comprenant des bâtonnets électroluminescents d'une source de lumière à diodes électroluminescentes planes.

L'invention couvre cependant également le cas dans lequel les bâtonnets électroluminescents 80 de la source lumineuse 100 sont des diodes électroluminescentes planes. Elle s'applique ainsi à toute source lumineuse 100 comprenant une pluralité d'éléments électroluminescents.

On pourra également prévoir d'autres dimensionnements particuliers de la source lumineuse 100 selon l'invention, et notamment une dimension de la surface éclairante par exemple d'au plus 10 x 10 mm². La densité des bâtonnets électroluminescents 80 et la superficie de la surface éclairante peuvent en outre être calculées pour que la luminance obtenue par la pluralité de bâtonnets électroluminescents soit par exemple d'au moins 60 Cd/mm². La dimension optimale de la surface éclairante de la source lumineuse 100 dépendra de la fonction visée.

La hauteur des bâtonnets électroluminescents 80 peut également être modifiée au sein de la source lumineuse 100, de sorte que certains bâtonnets électroluminescents peuvent avoir une hauteur différente d'autres bâtonnets électroluminescents.

La forme des bâtonnets électroluminescents 80 peut également varier, notamment sur la section des bâtonnets et sur la forme de la face terminale 26. Il a été illustré, sur la figure 4, des bâtonnets électroluminescents présentant une forme générale cylindrique, et notamment de section polygonale, ici plus particulièrement hexagonale. On comprend qu'il importe que la lumière puisse être émise à travers la paroi circonférentielle, que celle-ci présente une forme polygonale ou circulaire par exemple.

Par ailleurs, la face terminale 26 peut présenter une forme sensiblement plane et perpendiculaire à la paroi circonférentielle, de sorte qu'elle s'étend sensiblement parallèlement à la face supérieure 16 du substrat 10, tel que cela est illustré sur la figure 4, ou bien elle peut présenter une forme bombée ou en pointe en son centre, de manière à multiplier les directions d'émission de la lumière sortant de cette face terminale, tel que cela est illustré sur la figure 5.

Sur la figure 4, les bâtonnets électroluminescents 80 sont agencés en matrice à deux dimensions constituant un sous-ensemble. Un tel sous-ensemble peut par exemple correspondre à un pixel de l'image projetée, et la source lumineuse 100 peut ainsi comprendre plusieurs sous-ensembles correspondant à des pixels respectifs. Un sous-ensemble comprend au moins un bâtonnet électroluminescent 80.

Cet agencement pourrait être tel que les bâtonnets électroluminescents soient agencés en quinconce. L'invention couvre d'autres répartitions des bâtonnets, avec notamment des densités de bâtonnets qui peuvent être variables d'un sous-ensemble à l'autre.

La source lumineuse 100 peut comprendre en outre, tel qu'illustré sur la figure 5, une couche 30 d'un matériau polymère dans laquelle des bâtonnets électroluminescents 80 sont au moins partiellement noyés. La couche 30 peut ainsi s'étendre sur toute l'étendue du substrat ou seulement autour d'un pixel uniquement.

Le matériau polymère, qui peut notamment être à base de silicone, permet de protéger les bâtonnets électroluminescents 80 sans gêner la diffusion des rayons lumineux.

Il est généralement possible d'intégrer dans cette couche 30 de matériau polymère des moyens de conversion de longueur d'onde, et par exemple des luminophores, aptes à absorber au moins une partie des rayons émis par l'un des bâtonnets électroluminescents 80 et à convertir au moins une partie de ladite lumière d'excitation absorbée en une lumière d'émission ayant une longueur d'onde différente de celle de la lumière d'excitation.

La source lumineuse 100 peut comporter en outre un revêtement 32 de matériau réfléchissant la lumière, qui est disposé entre les bâtonnets électroluminescents 80 pour dévier les rayons initialement orientés vers le substrat 10, vers la face terminale 26 des bâtonnets électroluminescents 80. En d'autres termes, la face supérieure 16 du substrat 10 peut comporter un moyen réfléchissant qui renvoie les rayons lumineux, initialement orientés vers la face supérieure 16, vers la face de sortie de la source lumineuse 100. On récupère ainsi des rayons qui autrement seraient perdus. Ce revêtement 32 est disposé entre les bâtonnets électroluminescents 80 sur la couche d'oxyde conducteur transparent 29.

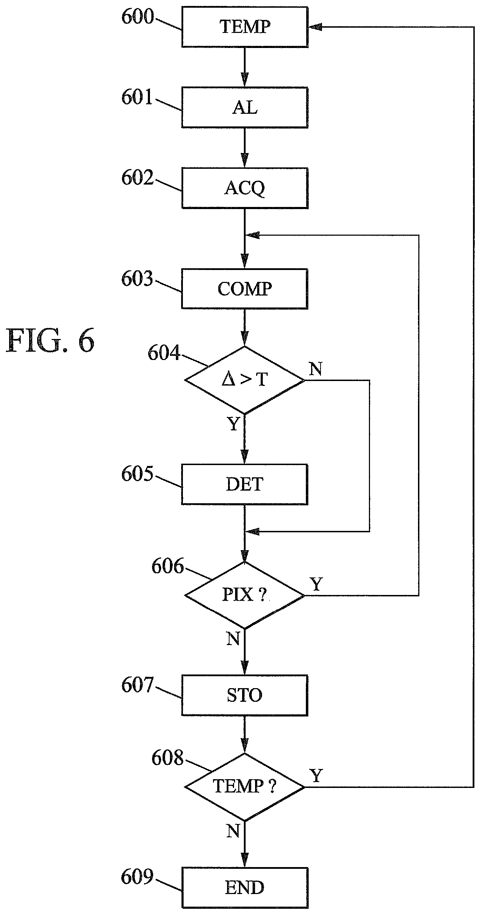

La figure 6 est un diagramme illustrant les étapes d'un procédé de calibration de la source lumineuse 2, selon un mode de réalisation de l'invention.

A une étape 600 optionnelle, le module lumineux 2 est mis en température à une valeur de température donnée. On appelle « mise en température » le fait de placer le module lumineux 2 dans un environnement à une température correspondant sensiblement à la valeur de température donnée. La précision de la mise en température peut être améliorée sans ajouter de capteurs supplémentaires, en accédant à la température captée par le capteur de température 208 du module lumineux 2. Alternativement la « mise en température » peut être effectuée en allumant la source lumineuse pendant une durée lui permettant d'avoir une température stabilisée.

A une étape 601, l'ensemble des éléments électroluminescents de la source lumineuse 100 est alimenté par le circuit de pilotage 102. Dans l'exemple décrit ci-après, et afin de clarifier l'exposé de l'invention, tous les sous-ensembles sont alimentés avec une même valeur de courant. On comprendra toutefois, qu'en fonction de la fonction lumineuse à réaliser, les sous-ensembles d'éléments électroluminescents peuvent être alimentés par des courants respectifs. L'ordre d'alimenter la source lumineuse peut être issu d'une unité de commande non représentée sur la figure 3. L'unité de commande peut être intégrée dans le module lumineux 2 ou, alternativement, peut être intégrée dans le module de calibration 109 qui envoie alors un ordre d'allumage au module lumineux pour déclencher l'alimentation de la source lumineuse 100 par l'unité de pilotage 102.

Lorsque la source lumineuse 2 est alimentée, une image projetée est obtenue sur l'écran 105, telle que l'image projetée illustrée sur la figure 2 par exemple. Chaque pixel de l'image projetée correspond à au moins un sous-ensemble d'éléments électroluminescents.

L'image projetée sur l'écran 105 est acquise à une étape 602 par la caméra 112, puis transmise au processeur 110 pour traitement.

L'image projetée et acquise par la caméra peut être comparée, pixel par pixel, à une image de référence, à une étape 603. Comme expliqué ci-avant, dans l'exemple considéré, l'image de référence est une image blanche dont tous les pixels ont une intensité lumineuse égale.

Ainsi, pour un premier pixel de l'image projetée, l'étape 603 consiste à comparer une différence entre une intensité lumineuse du premier pixel et une intensité lumineuse d'un pixel correspondant d'une image de référence, et un seuil prédéterminée. On appelle pixel correspondant un pixel possédant sensiblement les mêmes coordonnées spatiales dans l'image de référence, que le premier pixel dans l'image projetée et acquise. A cet effet, l'image projetée et acquise peut être redimensionnée pour être d'une taille et d'un format comparable à l'image de référence.

Le seuil prédéterminé peut correspondre à un nombre de candelas donné par exemple. Plus le seuil prédéterminé est élevé, moins la correction apportée par le procédé de calibration est importante. Au contraire, un seuil prédéterminé de valeur faible permet d'obtenir une image projetée très proche de l'image de référence.

A une étape 604, suite à l'étape 603 de comparaison, il est vérifié si la comparaison est positive, c'est-à-dire si la différence obtenue est supérieure au seuil prédéterminé.

Si tel est le cas, le procédé continue à l'étape 605. Sinon, le procédé passe directement à l'étape 606.

A l'étape 605, en fonction de la différence entre l'intensité lumineuse du premier pixel et l'intensité lumineuse du pixel correspondant, le processeur 110 peut déterminer une valeur d'alimentation modifiée d'au moins un premier élément électroluminescent du sous-ensemble correspondant au premier pixel.

Dans le cas où le module de calibration 109 a accès aux valeurs de courant délivrées par l'unité de pilotage 102 du module lumineux 2, la valeur d'alimentation modifiée peut être une valeur de courant, exprimée en ampères. Toutefois, il est possible que le module de calibration 109 n'ait pas accès aux valeurs de l'alimentation délivrée par l'unité de pilotage 102, auquel cas la valeur d'alimentation modifiée peut être un facteur multiplicatif, qui pourra ensuite être appliqué à l'unité de pilotage 102 pour alimenter le premier élément électroluminescent du sous-ensemble correspondant au premier pixel.

Par exemple, si le premier pixel est plus lumineux que le pixel correspondant dans l'image de référence, le facteur multiplicatif est inférieur à 1 de manière à diminuer le courant délivré au premier élément électroluminescent du sous-ensemble, dans le cas où le premier élément électroluminescent est pilotable isolément d'autres éléments électroluminescents du même sous-ensemble. Dans le cas contraire, le courant délivré au sous-ensemble comprenant le premier élément est diminué.

Dans le cas où le premier pixel est moins lumineux que le pixel correspondant dans l'image de référence, le facteur multiplicatif est supérieur à 1 de manière à augmenter le courant délivré au premier élément électroluminescent du sous-ensemble, dans le cas où le premier élément électroluminescent est pilotable isolément d'autres éléments électroluminescents du même sous-ensemble. Dans le cas contraire, le courant délivré au sous-ensemble comprenant le premier élément est augmenté.

A une étape 606, il est vérifié si l'étape de comparaison 603 a été effectuée pour l'ensemble des pixels de l'image projetée et acquise. Si tel est le cas, le procédé continue à l'étape 607. Dans le cas contraire, les étapes 603 à 606 sont répétées pour un pixel suivant de l'image projetée et acquise.

Afin de permettre une adaptation de l'alimentation de certains des éléments électroluminescents de la source lumineuse 100, la valeur ou les valeurs d'alimentation modifiée est stockée à une étape 607 dans la mémoire 106 du module lumineux 2, en association avec un identifiant du sous-ensemble comprenant l'élément électroluminescent pour lequel la valeur d'alimentation modifiée a été déterminée. A noter que la mémoire 106 peut être une mémoire interne de l'unité de pilotage 102.

L'identifiant du sous-ensemble identifie, selon une première réalisation, le sous-ensemble uniquement. Cette réalisation permet de traiter le cas où les éléments électroluminescents d'un même sous-ensemble ne sont pas pilotables individuellement et reçoivent tous la même alimentation qui est propre au sous-ensemble.

En variante, l'identifiant du sous-ensemble est complété d'un identifiant de l'élément électroluminescent auquel s'applique la valeur d'alimentation modifiée. Cette réalisation permet de traiter le cas où les éléments électroluminescents d'un même sous-ensemble sont pilotables individuellement. Dans ce cas, l'étape 607 consiste à stocker la valeur d'alimentation modifiée en association avec l'identifiant du sous-ensemble et avec l'identifiant de l'élément électroluminescent pour lequel la valeur d'alimentation modifiée a été déterminée.

Dans le cas où l'étape 600 de mise en température a été mise en œuvre, l'étape 607 peut consister à stocker la valeur d'alimentation modifiée en association avec l'identifiant du sous-ensemble, éventuellement avec l'identifiant de l'élément électroluminescent, et en outre avec la valeur de température de l'étape de mise en température 600. La valeur de température peut soit être issue du capteur de température 208 soit être transmise par l'unité de calibration 109.

Selon un mode de réalisation, le procédé est itéré pour différentes mises en température à des valeurs de température différentes, de manière à avantageusement obtenir plusieurs calibrations du module lumineux à des températures différentes. Dans ce cas, il est vérifié à l'étape 608 si d'autres mises en température restent à être effectuées. Si tel est le cas, le procédé est itéré et retourne à l'étape 600 pour une mise en température à une valeur de température différente de celle de l'itération précédente. Dans le cas contraire, le procédé de calibration est achevé à une étape 609.

Pour effectuer une calibration pour différents niveaux d'alimentation électrique, les étapes 601 à 607 sont répétées pour une température donnée en faisant varier le niveau d'alimentation à l'étape 601.

Le stockage de valeurs d'alimentation modifiées dans le module lumineux 2 permet d'adapter l'alimentation des éléments électroluminescents aux défauts de fabrication et de montage du module lumineux 2, lorsque l'unité de pilotage 102 alimente les éléments électroluminescents en fonction des valeurs d'alimentation initiales ou modifiées qui sont stockées dans la mémoire 106.

Dans le cas où un sous-ensemble d'éléments électroluminescents est stocké en association avec plusieurs valeurs d'alimentation modifiées et valeurs de température respectives, l'unité de pilotage 102 peut prendre en compte une température courante captée par le capteur de température 208 pour sélectionner l'une parmi plusieurs valeurs d'alimentation modifiées. L'unité de pilotage 102 peut par exemple sélectionner la valeur d'alimentation modifiée associée avec la valeur de température la plus proche de la température courante.

Ainsi, la présente invention permet de compenser les défauts de fabrication et de montage, et plus généralement tout défaut du module lumineux, sans requérir de modification du matériel optique du module lumineux 2. Une telle calibration est en particulier permise par l'utilisation d'une source comprenant des éléments électroluminescents tels que des bâtonnets électroluminescents de dimensions submillimétrique. En outre, de tels éléments électroluminescents acceptent généralement une alimentation différente d'une la valeur nominale d'alimentation, ce qui permet de mettre en œuvre l'invention.

Un autre moyen de compenser les défauts du moduler lumineux serait, dans le cas d'un module lumineux 2 tel qu'illustré en détails sur la figure 2, de modifier les coefficients de réflexion de la matrice de micro-miroirs DMD 103, afin d'augmenter les coefficients de réflexion, ou ratio ON/OFF dans les zones d'ombres de l'image projetée et de diminuer les coefficients de réflexion dans les zones trop lumineuses de l'image projetée.

Une telle solution alternative présente cependant l'inconvénient de devoir garder une marge pour pouvoir augmenter le ratio ON/OFF. La matrice de micro-miroirs DMD 103 n'est ainsi pas utilisée de manière optimale et le faisceau obtenu a une intensité globale réduite. La solution présentée en référence aux figures décrites ci-avant a l'avantage de ne pas présenter un tel inconvénient.

Bien entendu, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention.

## Revendications

1. Procédé de calibration d'un module lumineux (2), ledit module lumineux comprenant une source lumineuse (100) comprenant un ensemble d'éléments électroluminescents (8) disposés sur un même substrat (10), ledit procédé comprenant les étapes suivantes :
- alimenter (601) l'ensemble des éléments électroluminescents de manière à obtenir une image projetée par le module lumineux (2) sur un écran (105, 205) situé en dehors du module lumineux (2), l'image projetée comprenant un ensemble de pixels, chaque pixel correspondant à au moins un sous-ensemble d'au moins un élément électroluminescent de la source lumineuse, chaque sous-ensemble étant apte à être alimenté individuellement en courant ;
- pour chaque pixel de l'image projetée, comparaison (603) d'une différence entre une intensité lumineuse dudit pixel avec une intensité lumineuse prédéfinie d'un pixel correspondant d'une image de référence, ledit pixel correspondant, possédant sensiblement les mêmes coordonnées spatiales dans l'image de référence, que le pixel dans l'image projetée et acquise, avec un seuil prédéterminé ;
- dans le cas où, pour au moins un pixel donné de l'image projetée, la différence est supérieure au seuil prédéterminée, détermination (605) d'une valeur d'alimentation modifiée d'au moins un premier élément électroluminescent du sous-ensemble correspondant au pixel donné ;
- stockage (607), dans une mémoire (106) du module lumineux, de la valeur d'alimentation modifiée en association avec un identifiant du sous-ensemble comprenant le premier élément électroluminescent.

2. Procédé selon la revendication 1, comprenant en outre une étape de mise en température (600) du module lumineux (2) à une valeur de température donnée, dans lequel, lors de l'étape de stockage (607), la valeur d'alimentation modifiée est stockée en association avec l'identifiant du sous-ensemble comprenant le premier élément électroluminescent et avec la valeur de température donnée.

3. Procédé selon la revendication 2, dans lequel les étapes du procédé sont itérées, et dans lequel, à chaque itération, le module lumineux est mis en température à une valeur de température différente de la valeur de température de l'itération précédente.

4. Programme informatique comportant des instructions pour la mise en œuvre des étapes du procédé selon l'une des revendications 1 à 3, lorsque ces instructions sont exécutées par un processeur.

5. Système de calibration d'un module lumineux, ledit module lumineux comprenant une source lumineuse comprenant un ensemble d'éléments électroluminescents disposés sur un même substrat, ledit système comprenant:
- une unité de commande pour commander l'alimentation de l'ensemble des éléments électroluminescents de manière à obtenir une image projetée par le module lumineux sur un écran dudit système, ledit écran étant situé en dehors du module lumineux (2), l'image projetée comprenant un ensemble de pixels, chaque pixel correspondant à au moins un sous-ensemble d'au moins un élément électroluminescent de la source lumineuse, chaque sous-ensemble étant apte à être alimenté individuellement en courant ;
- une caméra (112) adaptée pour acquérir des images de l'image projetée sur l'écran ;
- un processeur (110) pour, pour chaque pixel de l'image projetée, comparer une différence entre une intensité lumineuse dudit pixel avec une intensité lumineuse prédéfinie d'un pixel correspondant d'une image de référence, ledit pixel correspondant, possédant sensiblement les mêmes coordonnées spatiales dans l'image de référence, que le pixel dans l'image projetée et acquise, avec un seuil prédéterminé ;
- ledit processeur étant adapté en outre pour, dans le cas où, pour au moins un pixel donné de l'image projetée, la différence est supérieure au seuil prédéterminée, déterminer une valeur d'alimentation modifiée d'au moins un premier élément électroluminescent du sous-ensemble correspondant au pixel donné, en vue de stocker la valeur d'alimentation modifiée en association avec un identifiant du sous-ensemble comprenant le premier élément électroluminescent dans une mémoire (106) dudit module lumineux.

## Patentansprüche

1. Verfahren zum Kalibrieren eines Lichtmoduls (2), wobei das Lichtmodul eine Lichtquelle (100) umfasst, die einen Satz von Elektrolumineszenzelementen (8) umfasst, die auf einem einzigen Substrat (10) angeordnet sind, wobei das Verfahren die folgenden Schritte umfasst:
- Versorgen (601) aller Elektrolumineszenzelemente mit Strom, um ein vom Lichtmodul (2) auf einen außerhalb des Lichtmoduls (2) befindlichen Bildschirm (105, 205) projiziertes Bild zu erhalten, wobei das projizierte Bild eine Reihe von Pixeln umfasst, wobei jedes Pixel mindestens einer Untergruppe von mindestens einem Elektrolumineszenzelement der Lichtquelle entspricht, wobei jede Untergruppe einzeln mit Strom versorgt werden kann;
- für jedes Pixel des projizierten Bildes Vergleich (603) einer Differenz zwischen einer Lichtintensität des Pixels und einer vordefinierten Lichtintensität eines entsprechenden Pixels eines Referenzbildes, wobei das entsprechende Pixel im Referenzbild im Wesentlichen die gleichen Raumkoordinaten wie das Pixel im projizierten und erfassten Bild aufweist, mit einem vorbestimmten Schwellenwert;
- für den Fall, dass für mindestens ein gegebenes Pixel des projizierten Bildes die Differenz größer als der vorbestimmte Schwellenwert ist, Bestimmen (605) eines modifizierten Leistungswertes mindestens eines ersten Elektrolumineszenzelements der Unterbaugruppe, das dem gegebenen Pixel entspricht;
- Speichern (607) des modifizierten Leistungswerts in Verbindung mit einer Kennung der Unterbaugruppe, die das erste elektrolumineszente Element umfasst, in einem Speicher (106) des Lichtmoduls.

2. Verfahren nach Anspruch 1, das ferner einen Schritt des Erhitzens (600) des Lichtmoduls (2) auf einen vorgegebenen Temperaturwert umfasst, wobei während des Speicherschritts (607) der modifizierte Leistungswert in Verbindung mit der Kennung der Unterbaugruppe, die das erste Elektrolumineszenzelement umfasst, und mit dem vorgegebenen Temperaturwert gespeichert wird.

3. Verfahren nach Anspruch 2, wobei die Schritte des Verfahrens wiederholt werden und wobei bei jeder Wiederholung das Lichtmodul auf einen Temperaturwert erhitzt wird, der sich von dem Temperaturwert der vorherigen Wiederholung unterscheidet.

4. Computerprogramm, das Anweisungen zum Ausführen der Schritte des Verfahrens nach einem der Ansprüche 1 bis 3 umfasst, wenn diese Anweisungen von einem Prozessor ausgeführt werden.

5. System zum Kalibrieren eines Lichtmoduls, wobei das Lichtmodul eine Lichtquelle umfasst, die eine Gruppe von Elektrolumineszenzelementen umfasst, die auf demselben Substrat angeordnet sind, wobei das System umfasst:
- eine Steuereinheit zum Steuern der Stromversorgung aller Elektrolumineszenzelemente, um ein vom Lichtmodul auf einen Bildschirm des Systems projiziertes Bild zu erhalten, wobei sich der Bildschirm außerhalb des Lichtmoduls (2) befindet und das projizierte Bild eine Reihe von Pixeln umfasst, wobei jedes Pixel mindestens einer Untergruppe von mindestens einem Elektrolumineszenzelement der Lichtquelle entspricht und jede Untergruppe einzeln mit Strom versorgt werden kann;
- eine Kamera (112), die dazu ausgelegt ist, Bilder des auf den Bildschirm projizierten Bildes aufzunehmen;
- einen Prozessor (110), der für jedes Pixel des projizierten Bildes eine Differenz zwischen einer Lichtintensität des Pixels und einer vordefinierten Lichtintensität eines entsprechenden Pixels eines Referenzbildes, wobei das entsprechende Pixel im Wesentlichen die gleichen Raumkoordinaten im Referenzbild wie das Pixel im projizierten und erfassten Bild aufweist, mit einem vorbestimmten Schwellenwert vergleicht;
- wobei der Prozessor ferner so ausgelegt ist, dass er für den Fall, dass für mindestens ein gegebenes Pixel des projizierten Bildes die Differenz größer als der vorbestimmte Schwellenwert ist, einen modifizierten Leistungswert mindestens eines ersten Elektrolumineszenzelements der Unterbaugruppe entsprechend dem gegebenen Pixel zu bestimmen, um den modifizierten Leistungswert in Verbindung mit einer Kennung der die das erste Elektrolumineszenzelement umfassenden Unterbaugruppe in einem Speicher (106) des Lichtmoduls zu speichern.

## Claims

1. Method for calibrating a light module (2), said light module comprising a light source (100) comprising a set of electroluminescent elements (8) arranged on a single substrate (10), said method comprising the following steps:
- powering (601) all of the electroluminescent elements so as to obtain an image projected by the light module (2) onto a screen (105, 205) located outside the light module (2), the projected image comprising a set of pixels, each pixel corresponding to at least one subset of at least one electroluminescent element of the light source, each subset being capable of being individually powered by current;
- for each pixel of the projected image, comparison (603) of a difference between a light intensity of said pixel and a predefined light intensity of a corresponding pixel of a reference image, said corresponding pixel having substantially the same spatial coordinates in the reference image as the pixel in the projected and acquired image, with a predetermined threshold;
- in the event that, for at least one given pixel of the projected image, the difference is greater than the predetermined threshold, determining (605) a modified power value of at least one first electroluminescent element of the subassembly corresponding to the given pixel;
- storing (607), in a memory (106) of the light module, the modified power value in association with an identifier of the subassembly comprising the first electroluminescent element.

2. Method according to claim 1, further comprising a step of heating (600) the light module (2) to a given temperature value, wherein, during the storage step (607), the modified power value is stored in association with the identifier of the subassembly comprising the first electroluminescent element and with the given temperature value.

3. Method according to claim 2, wherein the steps of the method are repeated, and wherein, at each repetition, the light module is heated to a temperature value different from the temperature value of the previous repetition.

4. Computer program comprising instructions for implementing the steps of the method according to one of claims 1 to 3, when these instructions are executed by a processor.

5. System for calibrating a light module, said light module comprising a light source comprising a set of electroluminescent elements arranged on the same substrate, said system comprising:
- a control unit for controlling the power supply to all of the electroluminescent elements in order to obtain an image projected by the light module onto a screen of said system, said screen being located outside the light module (2), the projected image comprising a set of pixels, each pixel corresponding to at least one subset of at least one electroluminescent element of the light source, each subset being capable of being individually supplied with current;
- a camera (112) adapted to acquire images of the image projected onto the screen;
- a processor (110) for, for each pixel of the projected image, comparing a difference between a light intensity of said pixel and a predefined light intensity of a corresponding pixel of a reference image, said corresponding pixel having substantially the same spatial coordinates in the reference image as the pixel in the projected and acquired image, with a predetermined threshold;
- said processor being further adapted, in the event that, for at least one given pixel of the projected image, the difference is greater than the predetermined threshold, determine a modified power value of at least one first electroluminescent element of the subassembly corresponding to the given pixel, in order to store the modified power value in association with an identifier of the subassembly comprising the first electroluminescent element in a memory (106) of said light module.
